# EUROPEAN PATENT SPECIFICATION

(11) **EP 3 799 461 B1**
(45) Date of publication and mention of the grant of the patent: **30.03.2022**
(21) Application number: 19815691.1
(22) Date of filing: 05.06.2019
(51) Int. Cl.: H04W 12/08, H04W 12/037, H04W 12/0471, H04W 12/106, H04W 76/18, H04W 12/122, H04W 92/20

(54) **NETWORK VALIDITY VERIFICATION METHOD AND DEVICE AND COMPUTER STORAGE MEDIUM**
VERFAHREN UND VORRICHTUNG ZUR VERIFIZIERUNG DER NETZWERKGÜLTIGKEIT UND COMPUTERSPEICHERMEDIUM
PROCÉDÉ ET DISPOSITIF DE VÉRIFICATION DE VALIDITÉ D'UN RÉSEAU ET SUPPORT D'INFORMATIONS INFORMATIQUE

(30) Priority: 05.06.2018 CN 201810570980
(43) Date of publication of application: 31.03.2021
(73) Proprietor: GUANGDONG OPPO MOBILE TELECOMMUNICATIONS CORP., LTD., Dongguan Guangdong 523860 (CN)
(72) Inventor: YANG, Ning, Dongguan, Guangdong 523860 (CN)
(74) Representative: Mewburn Ellis LLP
(86) International application number: PCT/CN2019/090088
(87) International publication number: WO 2019/233432

(56) References cited:
- WO-A1-2016/123809
- CN-A- 108 029 015
- CN-A- 109 756 900
- ZTE CORPORATION ET AL: "Security of REJECT message", 3GPP DRAFT; R2-1804460_R2-1802046_INACTIVEREJECTSECURI TY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428196, Retrieved from the Internet: URL:http://www.3gpp.org/ftp/Meetings%5F3GP P%5FSYNC/RAN2/Docs/ [retrieved on 2018-04-14]
- HUAWEI ET AL: "Discussion on security during Resume reject in INACTIVE state in NR", 3GPP DRAFT; S3-180131, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 26 January 2018 (2018-01-26), pages 1-6, XP051390589, Retrieved from the Internet: URL:http://www.3gpp.org/ftp/tsg%5Fsa/WG3%5 FSecurity/TSGS3%5F90%5FGothenburg/Docs/
- HUAWEI ET AL: "Key handling at RRC-INACTIVE state transitions", 3GPP DRAFT; 33501_CR0184R1_(REL-15)_S3-182060-KEY HANDLING AT RRC STATE TRANSITIONS, 3RD GENERATION PARTNERSHIP PROJECT (3GPP), MOBILE COMPETENCE CENTRE ; 650, ROUTE DES LUCIOLES ; F-06921 SOPHIA-ANTI , vol. SA WG3, no. La Jolla (US); 20180521 - 20180525 4 June 2018 (2018-06-04), XP051532687, Retrieved from the Internet: URL:http://www.3gpp.org/ftp/tsg%5Fsa/TSG%5 FSA/TSGS%5F80/Docs/SP%2D180455%2Ezip [retrieved on 2018-06-04]
- ERICSSON: "Clause 8.2.2.1 (key handling - RRC INACTIVE/CONNECTED state transition)", 3GPP DRAFT; S3-173094_8.2.2.1_KEY_HANDLING_RRC_INACTIV E_CONNECTED_STATE_TRANSITION, 3RD GENERATION PARTNERSHIP PROJECT (3GPP), MOBILE COMPETENCE CENTRE ; 650, ROUTE DES LUCIOLES ; F-06921 SOPHIA-ANTIP , vol. SA WG3, no. Reno; 20171127 - 20171201 20 November 2017 (2017-11-20), XP051380355, Retrieved from the Internet: URL:http://www.3gpp.org/ftp/tsg%5Fsa/WG3%5 FSecurity/TSGS3%5F89%5FReno/Docs/ [retrieved on 2017-11-20]
- ERICSSON: "Tdoc R2-1807932, Analyses of the SA3 requirements on working assumption for inactive security", 3GPP TSG-RAN WG2 #102, 10 May 2018 (2018-05-10), XP051464225,

## Description

### TECHNICAL FIELD

This disclosure relates to the field of wireless communication, and more particularly to a method and an apparatus for validity verification of a network.

### BACKGROUND

In order to meet people's pursuit of service speed, delay, high-speed mobility, and energy efficiency, as well as diversity and complexity of business in future life, the international standard organization of 3rd generation partnership project (3GPP) began to develop the 5th generation (5G) mobile communication technology.

The 5G mobile communication technology mainly applies to the following scenarios: enhanced mobile broadband (eMBB), ultra reliable low latency communication (URLLC), and massive machine type communication (MMTC).

In the 5G network environment, in order to reduce air-port signaling and recover wireless connection as well as data service quickly, a new radio resource control (RRC) state, that is, RRC inactive state (RRC_INACTIVE), is defined. The RRC inactive state is different from an RRC idle state (RRC IDLE) and an RRC connected state (RRC_CONNECTED).

When user equipment is in the RRC_INACTIVE state, the network side will configure a paging area of a radio access network (RAN) for the UE through dedicated signaling, the RAN paging area can be one or more than one cell. When the UE moves in the paging area of the RAN, there is no need to inform the network side, and the UE follows the mobility behavior in the idle state, that is, follows the principle of cell selection/reselection. When the UE moves out of the paging area of the RAN, the UE will be triggered to recover RRC connection and reacquire the paging area of the RAN. When the UE has downlink data to receive, the base station (such as gNB) that maintains the connection between the RAN and the core network (CN) for the UE will trigger all cells in the paging area of the RAN to send paging messages to the UE, making the UE in the INACTIVE state can recover RRC connection to receive data.

Therefore, in the following three situations, the UE enters the RRC connection state from the INACTIVE state:
I. When the UE has downlink data to receive, the network side initiates a paging at the RAN side, prompting the UE to enter the RRC connection state.
II. The UE initiates RAN location area update, such as periodic RAN location update or cross-region location update.
III. The UE needs to transmit uplink data, which prompts the UE to enter the RRC connection state.

In some cases, such as load congestion, after receiving an RRC resume request message from the UE, the network side will send an RRC reject message to the UE. The RRC reject message carries time information, that is, waittimer, the UE starts a timer after receiving the waittimer. The UE will not attempt to send the RRC resume request message in the cell until the timer expires.

Considering network security, there may be false base stations always reply an RRC reject message to the UE that tries to resume or establish an RRC connection, where the RRC reject message replied by the false base station carries waittimer with a long configuration time, causing the UE out of service.

In ZTE CORPORATION ET AL: "Security of REJECT message", 3GPP DRAFT, 2018-04-14, XP051428196, a unified framework to handle the REJECT during congestion and REJECT for RNAU procedure is proposed as follows: Proposal 1: REJECT message shall not be sent over SRB0 (UE shall discard such a message)-i.e. revert the agreement from RAN2#99-bis; Proposal 2: REJECT message shall be sent over SRB1 and shall carry a piggy backed container which is integrity protected by the anchor gNB.

In HUAWEI ET AL: "Discussion on security during Resume reject in INACTIVE state in NR", 3GPP DRAFT, 2018-01-26, pages 1-6, XP051390589, the following are proposed: Proposal 1: Reply the RAN2 LS for question 1 to indicate that the proposed scenario is vulnerable to DoS security threat to the UE and in order to eliminate such security DoS threat, it is recommended to integrity protect the wait timer; Proposal 2: Reply the RAN2 LS for question 2 to indicate that the proposed scenario is vulnerable to replay security threat, and it is recommended to change the computation of shortResumeMAC-I in 5G to eliminate such security threat; Proposal 3: Reply the LS with the proposed solution which solves the two problems.

HUAWEI ET AL: "Key handling at RRC-INACTIVE state transitions", 3GPP DRAFT, 2018-06-04, XP051532687 aims to allow the UE to notify the network if it moves out of the configured RNA (RAN-based notification area) or if UE initiates a periodic RAN-based notification area update procedure. The UE and gNB store the AS security context in RRC_INACTIVE state and reactivate the AS security context when the UE initiates the RAN-based Notification Area Update (RNAU) procedure.

ERICSSON: "Clause 8.2.2.1 (key handling-RRC INACTIVE/CONNECTED state transition)", 3GPP DRAFT, 2017-11-20, XP051380355 aims to allow the gNB to suspend an RRC connection to be resumed by the UE at a later time. The UE may resume the RRC connection in the same or different gNB than where the suspend take place. The UE and gNB store the AS security context at suspend and reactivate the AS security context at resume.

### SUMMARY

In order to solve the above technical problems, embodiments of the present application provide a method and apparatus for validity verification of a network. The invention is set out in the appended set of claims.

### BRIEF DESCRIPTION OF THE DRAWINGS

The drawings described herein are used to provide a further understanding of the present application and constitute a part of the present application. The schematic embodiments of the present application and the descriptions thereof are used to explain the present application, and do not constitute an improper limitation on the present application. In the drawings:
FIG. 1 is a schematic diagram of a UE in a gNB cell in a RAN range.
FIG. 2 is a first schematic diagram of an RRC connection resume process.
FIG. 3 is a second schematic diagram of an RRC connection resume process
FIG. 4 is a first schematic flowchart of a method for validity verification of a network according to embodiments.
FIG. 5 is a second schematic flowchart of a method for validity verification of a network according to embodiments.
FIG. 6 is a third schematic flowchart of a method for validity verification of a network which does not form part of the claimed invention.
FIG. 7 is a fourth schematic flowchart of a method for validity verification of a network which does not form part of the claimed invention.
FIG. 8 is a fifth schematic flowchart of a method for validity verification of a network according to embodiments.
FIG. 9 is a sixth schematic flowchart of a method for validity verification of a network according to embodiments.
FIG. 10 is a seventh schematic flowchart of a method for validity verification of a network according to embodiments.
FIG. 11 is an eighth schematic flowchart of a method for validity verification of a network according to embodiments.
FIG. 12 is a ninth schematic flowchart of a method for validity verification of a network according to embodiments.
FIG. 13 is a first schematic structural diagram of an apparatus for validity verification of a network according to embodiments.
FIG. 14 is a second schematic structural diagram of an apparatus for validity verification of a network which does not form part of the claimed invention.
FIG. 15 is a second schematic structural diagram of an apparatus for validity verification of a network which does not form part of the claimed invention.
FIG. 16 is a schematic structural diagram of a computer device according to embodiments.

### DETAILED DESCRIPTION

In order to understand the features and technical contents of the embodiments of the present application in more detail, implementation of the embodiments of the present application will be described in detail below with reference to the accompanying drawings. The drawings are for reference only and are not intended to limit the embodiments of the present application.

The technical solution of the embodiments is mainly applied to a 5G mobile communication system. However, the technical solution of the embodiments is not only applicable to the 5G mobile communication system, and can also be applied to other types of mobile communication systems. The following describes the main application scenarios in the 5G mobile communication system.
1) eMBB scenario: eMBB aims to obtain multimedia content, services, and data for users, and its business demand is growing rapidly. Because eMBB may be deployed in different scenarios, such as indoor, urban, rural, etc., and its service capabilities and requirements vary widely, it is necessary to analyze the service in combination with specific deployment scenarios.
2) URLLC scenario: Typical applications of URLLC include: industrial automation, power automation, telemedicine operations, and traffic safety assurance.
3) mMTC scenario: Typical characteristics of URLLC include: high connection density, small amount of data, delay-insensitive services, low cost of modules, and long service life.

The following describes three RRC states in a 5G network environment.
1) RRC_IDLE state: Mobility is UE-based cell selection/reselection, paging is initiated by the core network (CN), and paging area is configured by the CN. There is no UE AS context at the base station. There is no RRC connection.
2) RRC_CONNECTED state: There is an RRC connection, and there is a UE AS context at the base station and the UE. The network knows that level of the location of the UE is based on a specific cell. Mobility is network controlled. Unicast data can be transmitted between the UE and the base station.
3) RRC_INACTIVE state: Mobility is UE-based cell selection/reselection. There is a connection between CN and a radio access network (RAN). UE AS context exists on a certain base station. Paging is triggered by RAN, and RAN-based paging area is managed by RAN. The network knows that the location of the UE is based on the paging area of the RAN.

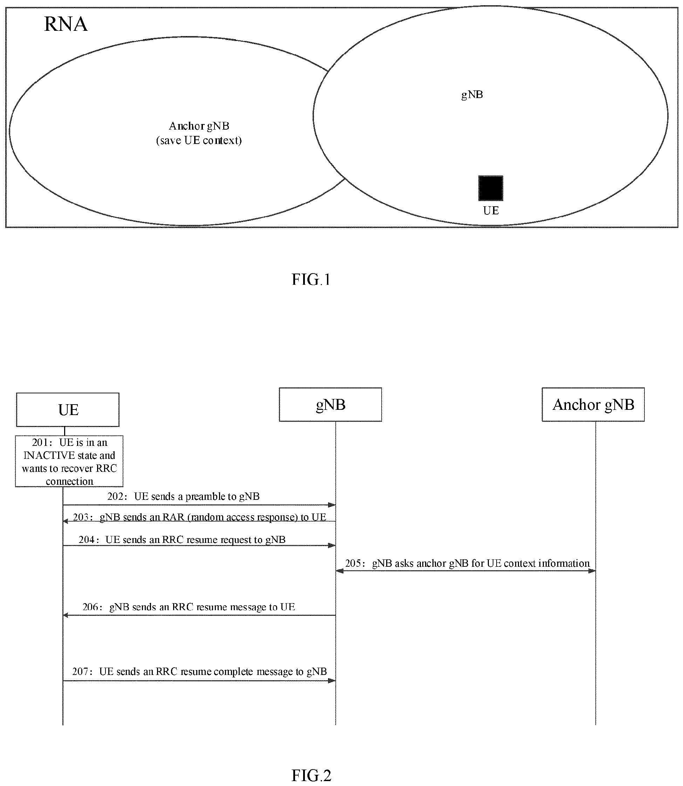

FIG. 1 is a schematic diagram of a UE in a gNB cell in a RAN range. When the UE is in an INACTIVE state and wants to recover RRC connection, it can be achieved through the following RRC connection resume process.

FIG. 2 is a first schematic diagram of an RRC connection resume process. As illustrated in FIG. 2, the RRC connection resume process includes the following operations.

Step 201: The UE is in an INACTIVE state, and the UE wants to recover RRC connection.

Step 202: The UE sends a preamble to the gNB.

Step 203: The gNB sends a random access response (RAR) to the UE.

Step 204: The UE sends an RRC Resume Request message to the gNB.

Step 205: The gNB asks the anchor gNB for UE context information.

Step 206: The gNB sends an RRC resume message to the UE.

Step 207: The UE sends an RRC resume complete message to the gNB.

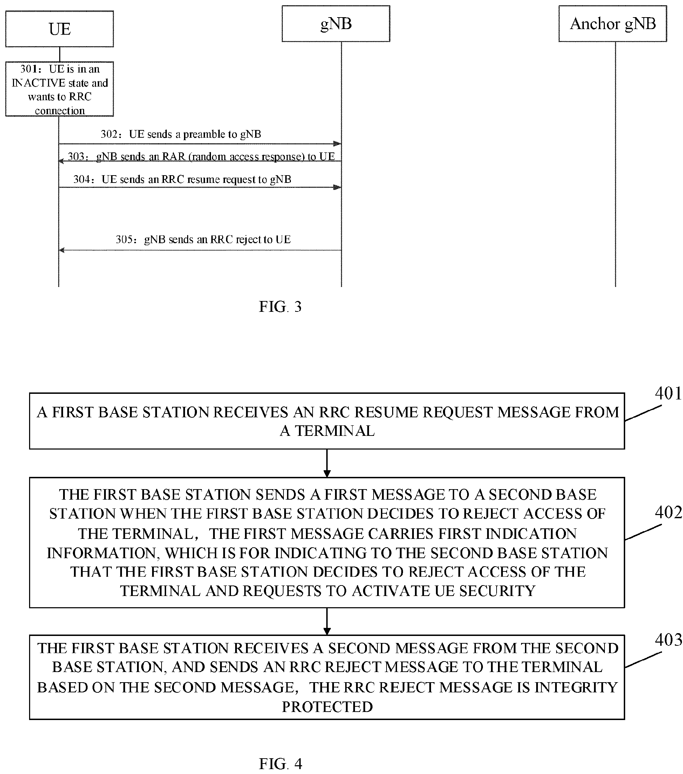

FIG. 3 is a second schematic diagram of an RRC connection resume process. As illustrated in FIG. 3, the RRC connection resume process includes the following operations.

Step 301: The UE is in an INACTIVE state, and the UE wants to recover RRC connection.

Step 302: The UE sends a preamble to the gNB.

Step 303: The gNB sends a random access response (RAR) to the UE.

Step 304: The UE sends an RRC Resume Request message to the gNB.

Step 305: The gNB sends an RRC reject message to the UE.

FIG. 4 is a first schematic flowchart of a method for validity verification of a network according to embodiments. As illustrated in FIG. 4, the method for validity verification of a network includes the following steps.

Step 401, a first base station receives an RRC resume request message from a terminal.

In embodiments, the first base station refers to a target base station that serves the terminal, correspondingly, a second base station refers to a source base station that serves the terminal. The first base station and the second base station refer to different base stations. Alternatively, the first base station and the second base station refer to the same base station. The second base station refers to a base station that saves UE context information.

In embodiments, the terminal may be any device capable of communicating with the network side, such as a mobile phone, a tablet computer, and a notebook computer. Further, the RRC resume request message is sent to the first base station when the terminal is in an inactive state.

Step 402, the first base station sends a first message to a second base station when the first base station decides to reject access of the terminal. The first message carries first indication information, which is for indicating to the second base station that the first base station decides to reject access of the terminal and requests to activate UE security.

Step 403, the first base station receives a second message from the second base station, and sends an RRC reject message to the terminal based on the second message. The RRC reject message is integrity protected.

In embodiments, the integrity protection of the RRC reject message is realized by the first base station.

The first base station receives the second message from the second base station, where the second message carries security information, and the security information includes a first key and a first security algorithm. If the first base station supports the first security algorithm, then the first base station sends the RRC reject message to the terminal through a first signaling radio bearer (SRB), such as SRB 0, and the RRC reject message is integrity protected. If the first base station does not support the first security algorithm, then the first base station sends the RRC reject message to the terminal through a second SRB (another SRB), and the RRC reject message is not integrity protected.

Here, the first key in the security information is one of: a key used at the second base station, a key generated based on cell identity (ID) information of the first base station. The first security algorithm in the security information is: an integrity protection algorithm and an encryption algorithm used at the second base station.

In some embodiments, if the first base station supports the first security algorithm, the first base station sets first duration information of a wait timer, and the first duration information is conveyed to the terminal through the RRC reject message. If the first base station does not support the first security algorithm, the first base station sets second duration information of the wait timer, the second duration information is conveyed to the terminal through the RRC reject message, and the second duration information is less than or equal to a first duration threshold, such as 16s (second).

When implemented, the first base station receives the RRC resume request message from the terminal, and the RRC resume request message carries first UE ID information of the terminal and MAC-I information for validity verification of the terminal. If the first base station decides to reject access of the terminal, the first base station addresses the second base station based on the first UE ID information of the terminal and sends the first message to the second base station. The first message carries the first indication information, the first UE ID information of the terminal, and the MAC-I information. The MAC-I information is for validity verification of the terminal by the second base station, and the security information is sent to the first base station when validity verification of the terminal is successful. The first message further carries cell ID information of the first base station, and the cell ID information of the first base station includes at least one of: cell global identifier (CGI), physical cell identifier (PCI), frequency information, or absolute radio frequency channel number (AFRCN).

When validity verification of the terminal based on the MAC-I information by the second base station fails, the second indication information is sent to the first base station by the second base station. The second indication information is for indicating to the first base station that validity verification of the terminal fails.

In some embodiments, after sending the RRC reject message, the first base station releases UE related information of the terminal. The UE related information of the terminal includes UE related information from the terminal and UE related information from the second base station.

Based on the above procedure, after receiving the RRC reject message, the terminal verifies validity of the first base station. If validity verification of the first base station is successful, the terminal accepts the RRC reject message and configuration information contained in the RRC reject message. The configuration information contained in the RRC reject message includes duration information of a wait timer. On the other hand, if validity verification of the first base station fails, the terminal reselects a cell and initiate an RRC connection resume procedure again.

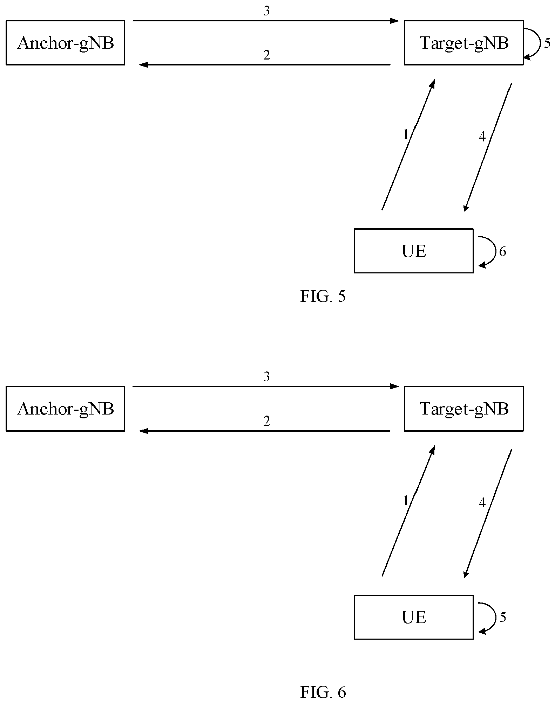

The situation where the integrity protection of the RRC reject message is realized by the first base station will be described below with reference to FIG. 5, in which the Target-gNB is the first base station and the Anchor-gNB is the second base station.
1. UE sends an RRC resume request message to the network side. The RRC resume request message carries I-RNTI, which is a UE ID, and ShortMAC-I information for validity verification of the UE.
2. The Target-gNB decides to reject the UE, and/or sets a longer duration for a wait timer. The Target-gNB addresses the Anchor-gNB according to the I-RNTI and carries indication information, I-RNTI, ShortMAC-I information, cell ID information of the Target-gNB, and so on. The indication information is for indicating to the Anchor-gNB that, the Target-gNB decides to reject the UE and requests to activate UE security. The cell ID information of the Target-gNB includes CGI, PCI, frequency information, AFRCN and the like of a target cell.
3. The Anchor-gNB verifies validity of the UE according to information provided by the Target-gNB. If validity verification of the terminal is successful, the Anchor-gNB sends security information to the Target-gNB. The security information includes information such as a key, an algorithm, and the like. The key can be the one used at an original cell, or, the key can be a key (*KgNB*^{∗}) derived from the PCI or ARFCN of the target cell. The algorithm is an integrity protection algorithm and an encryption algorithm used at the original cell. If validity verification of the terminal fails, the Anchor-gNB instructs the Target-gNB to reject the UE.
4. If the Target-gNB supports the algorithm configured by the original serving base station, then the original serving base station replies an RRC reject message to the UE through SRB0; otherwise, the Target-gNB replies the RRC reject message to the UE through a SRB message, and the RRC reject message is at least integrity protected.
5. After sending the RRC reject message, the Target-gNB releases all UE-related information, which includes information from the UE and information from the Anchor-gNB.
6. After receiving the RRC reject message, the UE verifies the validity of the network. If the verification indicates that the base station sending the message is not a false base station, the UE accepts the RRC reject message and all configuration information (such as waittimer) contained therein. Otherwise, the UE ignores the RRC reject message and considers that the current serving cell is in a barred state, and the UE will reselect a cell and try to initiate RRC connection recovery again.

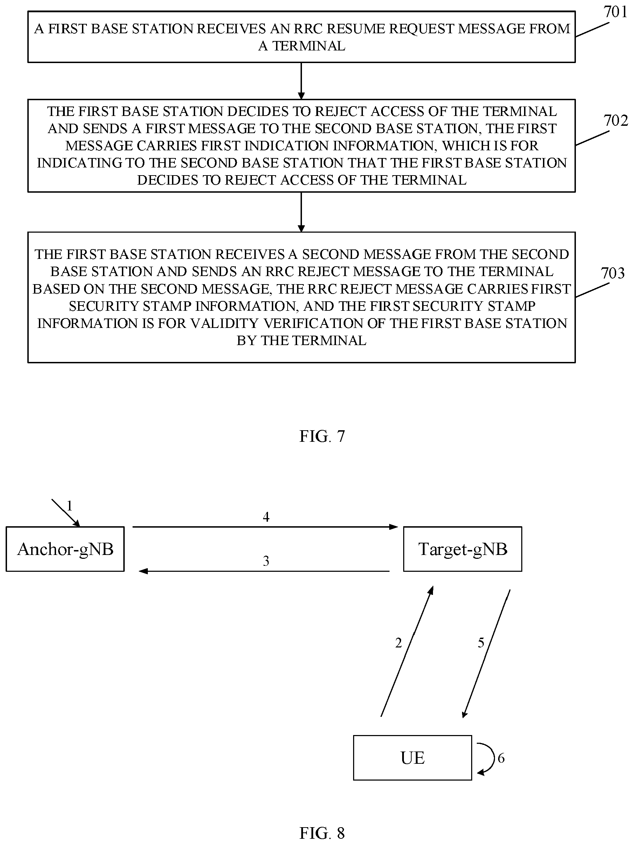

FIG. 7 is a fourth schematic flowchart of a method for validity verification of a network that does not form part of the claimed invention. As illustrated in FIG. 7, the method includes the following steps.

Step 701, a first base station receives an RRC resume request message from a terminal.

In embodiments, the first base station refers to a target base station that serves the terminal, correspondingly, a second base station refers to a source base station that serves the terminal. The first base station and the second base station refer to different base stations. Alternatively, the first base station and the second base station refer to the same base station. The second base station refers to a base station that saves UE context information.

In embodiments, the terminal may be any device capable of communicating with the network side, such as a mobile phone, a tablet computer, and a notebook computer. Further, the RRC resume request message is sent to the first base station when the terminal is in an inactive state.

Step 702, the first base station decides to reject access of the terminal and sends a first message to the second base station. The first message carries first indication information, which is for indicating to the second base station that the first base station decides to reject access of the terminal.

Step 703, the first base station receives a second message from the second base station and sends an RRC reject message to the terminal based on the second message. The RRC reject message carries first security stamp information, and the first security stamp information is for validity verification of the first base station by the terminal.

The first security stamp information carried in the RRC reject message can be generated by the second base station or by the first base station, which will be detailed below respectively.

### 1) The first security stamp information is generated by the second base station.

The first security stamp information is generated by the second base station based on a first calculation parameter and a second configuration function. Alternatively, the first security stamp information is generated by the second base station based on at least one of cell ID information of the first base station, cell ID information of the second base station, UE ID information of the terminal, or constant information.

Accordingly, the first base station receives the second message from the second base station, and the second message carries the first security stamp information and the first calculation parameter. The first base station sends the RRC reject message to the terminal, and the RRC reject message carries the first security stamp information and the first calculation parameter. Second security stamp information is generated by the terminal based on the first calculation parameter and a second configuration function, and the second security stamp information is compared with the first security stamp information by the terminal for validity verification of the first base station.

The second configuration function for the second base station is configured as follows. The second configuration function for calculating security stamp information is configured for at least one base station by operation, administration, and maintenance (OAM). The at least one base station includes the second base station.

The second configuration function for the terminal is configured as follows. The second configuration function for calculating security stamp information is configured for the terminal by the second base station, when the second base station releases the terminal to an inactive state. Alternatively, the second configuration function for calculating security stamp information is configured in a subscriber identity module (SIM) of the terminal.

When implemented, the first base station receives the RRC resume request message from the terminal, and the RRC resume request message carries first UE ID information of the terminal and MAC-I information for validity verification of the terminal. If the first base station decides to reject access of the terminal, the first base station addresses the second base station based on the first UE ID information of the terminal and sends the first message to the second base station. The first message carries the first indication information, the first UE ID information of the terminal, and the MAC-I information. The MAC-I information is for validity verification of the terminal by the second base station, and first security stamp information is generated and sent to the first base station by the second base station when validity verification of the terminal is successful. The first message further carries cell ID information of the first base station, and the cell ID information of the first base station includes at least one of: CGI, PCI, frequency information, or AFRCN.

Here, if validity verification of the terminal based on the MAC-I information by the second base station fails, second indication information is sent to the first base station from the second base station, and the second indication information is for indicating to the first base station that the validity verification of the terminal fails.

Based on the above procedure, after receiving the RRC reject message, the terminal verifies validity of the first base station. If validity verification of the first base station is successful, the terminal accepts the RRC reject message and configuration information contained in the RRC reject message. The configuration information contained in the RRC reject message includes duration information of a wait timer. On the other hand, if validity verification of the first base station fails, the terminal reselects a cell and initiate an RRC connection resume procedure again.

### 2) The first security stamp information is generated by the first base station.

The first base station receives the second message from the second base station, and the second message carries security information. The first base station generates the first security stamp information based on the security information. The first base station sends the RRC reject message to the terminal. The RRC reject message carries the first security stamp information and a first calculation parameter. Second security stamp information is generated by the terminal based on the first calculation parameter and a second configuration function, and the second security stamp information is compared with the first security stamp information by the terminal for validity verification of the first base station.

The security information may have three configurations.
1. The security information includes the first calculation parameter. Correspondingly, the first security stamp information is generated by the first base station based on the first calculation parameter and the second configuration function.
2. The security information includes a security key and a security algorithm. Correspondingly, the first security stamp information is generated by the first base station by using the security key and the security algorithm and based on at least one of cell ID information of the first base station, cell ID information of the second base station, UE ID information of the terminal, or constant information.
3. The security information includes the first calculation parameter, the security key, and the security algorithm. Correspondingly, the first security stamp information is generated by the first base station by using the security key and the security algorithm and based on the first calculation parameter and the second configuration function.

The second configuration function for the first base station is configured as follows. The second configuration function for calculating security stamp information is configured for at least one base station through OAM. The at least one base station includes the first base station. Alternatively, the second configuration function is configured by the second base station.

The second configuration function for the terminal is configured as follows. The second configuration function for calculating security stamp information is configured for the terminal by the second base station, when the second base station releases the terminal to an inactive state. Alternatively, the second configuration function for calculating security stamp information is configured in a subscriber identity module of the terminal.

When implemented, the first base station receives the RRC resume request message from the terminal, and the RRC resume request message carries first UE ID information of the terminal and MAC-I information for validity verification of the terminal. If the first base station decides to reject access of the terminal, the first base station addresses the second base station based on the first UE ID information of the terminal and sends the first message to the second base station. The first message carries the first indication information, the first UE ID information of the terminal, and the MAC-I information. The MAC-I information is for validity verification of the terminal by the second base station. At least one of the security information or cell ID information of the second base station is sent to the first base station by the second base station when validity verification of the terminal is successful. The first message further carries cell ID information of the first base station, and the cell ID information of the first base station includes at least one of: CGI, PCI, frequency information, or AFRCN.

Here, if validity verification of the terminal based on the MAC-I information by the second base station fails, the second indication information is sent to the first base station from the second base station, and the second indication information is for indicating to the first base station that the validity verification of the terminal fails.

Based on the above procedure, after receiving the RRC reject message, the terminal verifies validity of the first base station. If validity verification of the first base station is successful, the terminal accepts the RRC reject message and configuration information contained in the RRC reject message. The configuration information contained in the RRC reject message includes duration information of a wait timer. On the other hand, if validity verification of the first base station fails, the terminal reselects a cell and initiate an RRC connection resume procedure again.

The situation where the first security stamp information carried in the RRC reject message is generated by the second base station will be described below with reference to FIG. 8, in which the Target-gNB is the first base station and the Anchor-gNB is the second base station.
1. Before handling the RRC reject message, the network side acquires pre-configuration information for generating security stamp information in the following three manners.
   Option 1: OAM configures a function for generating a security stamp for all base stations, the prototype of the function can be function (Counter, I-RNTI, ShortMAC-I) or function (Counter, I-RNTI). However, input parameters are not limited to these parameters. UE acquires the function information through pre-configuration in the universal subscriber identity module (USIM) card.
   Option 2: The Anchor-gNB generates the security stamp such as shortMAC-I. The shortMAC-I is configured in the RRC reject message and the shortMAC-I is for validity verification of the network by the UE. Inputs for the network to generate the ShortMAC-I include: cell ID information of the Anchor-gNB and cell ID information of the target base station, UE ID information, and other constant information such as BEARER, COUNT, and DIRECTION. The value of the constant information can be set to 0 or 2. The security key and algorithm can be the key and algorithm used at the Anchor-gNB.
   Option 3: The original serving base station configures function information for calculating a security stamp and saves the function information as UE context, when the original serving base station releases the UE to an INACTIVE state.
2. UE sends an RRC resume request message to the network. The RRC resume request message carries I-RNTI, which is UE ID information, and ShortMAC-I information for validity verification of the UE.
3. The Target-gNB decides to reject the UE, and/or sets a longer duration for a wait timer. The Target-gNB addresses the Anchor-gNB according to the I-RNTI and carries indication information, I-RNTI, ShortMAC-I information, cell ID information of the Target-gNB, and so on. The indication information is for indicating to the Anchor-gNB that, the Target-gNB decides to reject the UE. The cell ID information of the Target-gNB can include CGI, PCI, frequency information, AFRCN and the like of a target cell.
4. The Anchor-gNB verifies validity of the UE according to information provided by the Target-gNB. If validity verification of the terminal is successful, the Anchor-gNB calculates security information, and sends the security information together with COUNTER to the Target-gNB. If validity verification of the terminal fails, the Anchor-gNB instructs the Target-gNB to reject the UE.
5. The Target-gNB carries the security information and the COUNTER information received from the Anchor-gNB in the RRC reject message, and sends the RRC reject message to the UE.
6. After receiving the RRC reject message, the UE calculates a new security stamp according to the COUNTER information and a function pre-configured for calculating the security stamp, then the UE compares the new security stamp with the security stamp configured at the network side to determine whether the Target-gNB is a false base station. If the target base station is not a false base station, the UE accepts the RRC reject message and all configuration information (such as waittimer) contained therein. Otherwise, the UE ignores the RRC reject message and considers that the current serving cell is in a barred state, and the UE will reselect a cell and try to initiate RRC connection recovery again.

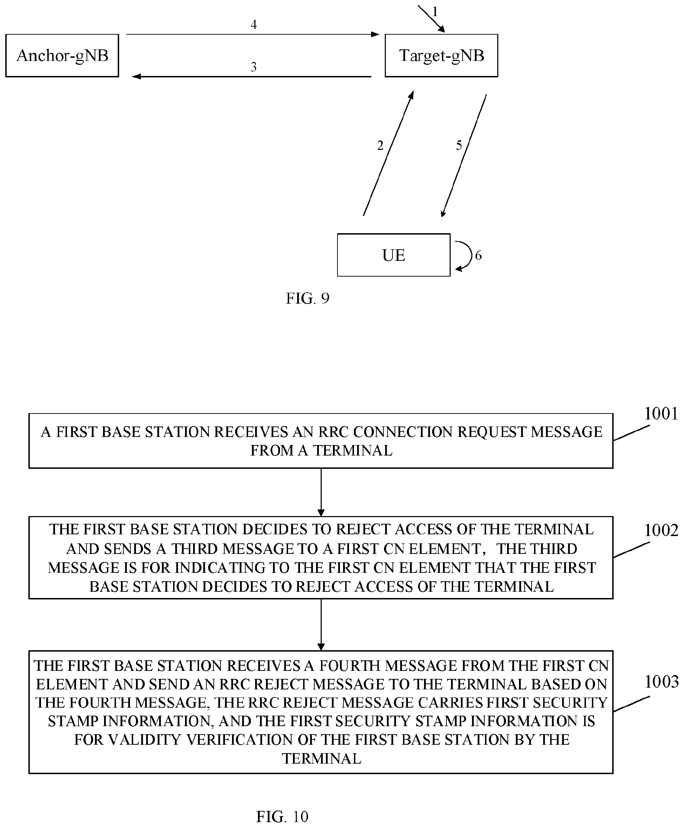

The situation where the first security stamp information carried in the RRC reject message is generated by the first base station will be described below with reference to FIG. 9, in which the Target-gNB is the first base station and the Anchor-gNB is the second base station.
1. Before handling the RRC reject message, the network side acquires pre-configuration information for generating security stamp information in the following three manners.
   Option 1: OAM configures a function for generating a security stamp for all base stations, the prototype of the function can be function (Counter, I-RNTI, ShortMAC-I) or function (Counter, I-RNTI). However, input parameters are not limited to these parameters. UE acquires the function information through pre-configuration in the USIM card.
   Option 2: The Anchor-gNB generates the security stamp such as shortMAC-I. The shortMAC-I is configured in the RRC reject message and is for validity verification of the network by the UE. Inputs for the network to generate the ShortMAC-I include: cell ID information of the Anchor-gNB and cell ID information of the target base station, UE ID information, and other constant information such as BEARER, COUNT, and DIRECTION. The value of the constant information can be set to 0 or 2. The security key and algorithm can be the key and algorithm used at the Anchor-gNB.
   Option 3: The original serving base station configures function information for calculating a security stamp and saves the function information as UE context, when the original serving base station releases the UE to an INACTIVE state.
2. UE sends an RRC resume request message to the network. The RRC resume request message carries I-RNTI, which is UE ID information, and ShortMAC-I information for validity verification of the UE.
3. The Target-gNB decides to reject the UE, and/or sets a longer duration for a wait timer. The Target-gNB addresses the Anchor-gNB according to the I-RNTI and carries indication information, I-RNTI, ShortMAC-I information, cell ID information of the Target-gNB, and so on. The indication information is for indicating to the Anchor-gNB that the Target-gNB decides to reject the UE. The cell ID information of the Target-gNB can include CGI, PCI, frequency information, AFRCN and the like of a target cell.
4. The Anchor-gNB verifies validity of the UE according to information provided by the Target-gNB. If validity verification of the terminal is successful, the Anchor-gNB sends security information and/or cell ID information of an original cell to the Target-gNB. If validity verification of the terminal fails, the Anchor-gNB instructs the Target-gNB to reject the UE.
   If Option 1 is adopted in step 1, the security information includes Counter.
   If Option 2 is adopted in step 1, the security information includes information such as key and algorithm. The key can be the one used at an original cell, or, the key can be a key (*KgNB*^{∗}) derived from the PCI, ARFCN of the target cell. The algorithm is an integrity protection algorithm and an encryption algorithm used at the original cell. The cell ID information of the original cell includes CGI, PCI, frequency information, AFRCN and the like of a target cell. The original serving base station sends to the Target-gNB the function pre-configured for UE to calculate a security stamp.
5. The Target-gNB calculates a security stamp, carries security stamp information and COUNTER information in a RRC reject message, and sends the RRC reject message to the UE.
6. After receiving the RRC reject message, the UE calculates a new security stamp according to the COUNTER information and a function pre-configured for calculating the security stamp, then the UE compares the new security stamp with the security stamp configured at the network side to determine whether the Target-gNB is a false base station. If the target base station is not a false base station, the UE accepts the RRC reject message and all configuration information (such as waittimer) carried therein. Otherwise, the UE ignores the RRC reject message and considers that the current serving cell is in a barred state, and the UE will reselect a cell and try to initiate RRC connection recovery again.

In the schemes illustrated in FIG. 7 to FIG. 9, Counter can be reset to 0 every time the UE enters an RRC connection state or updates an AS key.

FIG. 10 is a seventh schematic flowchart of a method for validity verification of a network according to embodiments. As illustrated in FIG. 10, the method includes the following steps.

Step 1001, a first base station receives an RRC connection request message from a terminal.

In embodiments, the first base station refers to a target base station serving the terminal.

In embodiments, the terminal may be any device capable of communicating with the network side, such as a mobile phone, a tablet computer, and a notebook computer. Further, the RRC connection request message is sent to the first base station when the terminal is in an inactive state.

In embodiments, in the 5G system, a first core network (CN) element refers to access and mobility management function (AMF). The present disclosure is not limited thereto, the first core network may have different names in different wireless systems.

Step 1002, the first base station decides to reject access of the terminal and sends a third message to a first CN element. The third message is for indicating to the first CN element that the first base station decides to reject access of the terminal.

Step 1003, the first base station receives a fourth message from the first CN element and send an RRC reject message to the terminal based on the fourth message. The RRC reject message carries first security stamp information, and the first security stamp information is for validity verification of the first base station by the terminal.

In embodiments, the first security stamp information carried in the RRC reject message can be generated by the first base station or by the first CN element, which will be described below respectively.

1) The first security stamp information is generated by the first base station.

The first base station receives the fourth message from the first CN element, and the fourth message carries a first calculation parameter. The first base station generates the first security stamp information based on the first calculation parameter and a third configuration function. The first base station sends the RRC reject message to the terminal, and the RRC reject message carries the first security stamp information and the first calculation parameter. Second security stamp information is generated by the terminal based on the first calculation parameter and the third configuration function, and the second security stamp information is compared with the first security stamp information for validity verification of the first base station.

The third configuration function for the first base station is configured as follows. The third configuration function for calculating security stamp information is configured for at least one base station by OAM, and the at least one base station includes the first base station.

The third configuration function for the terminal is configured as follows. The third configuration function for calculating security stamp information is configured in the SIM of the terminal.

When implemented, the first base station receives the RRC connection request message from the terminal, and the RRC connection request message carries second UE ID information of the terminal. If the first base station decides to reject access of the terminal, the first base station addresses the first CN element based on the second UE ID information of the terminal and sends the third message to the first CN element. The third message carries first indication information and the second UE ID information of the terminal, such that the first calculation parameter is conveyed to the first base station by the first CN element through the fourth message.

Based on the above procedure, after receiving the RRC reject message, the terminal verifies validity of the first base station. If validity verification of the first base station is successful, the terminal accepts the RRC reject message and configuration information contained in the RRC reject message. The configuration information contained in the RRC reject message includes duration information of a wait timer. On the other hand, if validity verification of the first base station fails, the terminal reselects a cell and initiate an RRC connection resume procedure again.

2) The first security stamp information is generated by the first CN element. The first security stamp information is generated by the first CN element based on the first calculation parameter and the third configuration function. Or, the first security stamp information is generated by the first CN element based on at least one of cell ID information of the first base station, cell ID information of the second base station, UE ID information of the terminal, or constant information.

Based on the above, the first base station receives the fourth message from the first CN element. The fourth message carries first security stamp information and a first calculation parameter. The first base station sends the RRC reject message to the terminal. The RRC reject message carries the first security stamp information and the first calculation parameter. Second security stamp information is generated by the terminal based on the first calculation parameter and a third configuration function, and the second security stamp information is compared with the first security stamp information by the terminal for validity verification of the first base station.

The third configuration function for the first CN element is configured as follows. The third configuration function for calculating security stamp information is configured for at least one CN element by OAM. The at least one CN element includes the first CN element.

The third configuration function for the terminal is configured as follows. The third configuration function for calculating security stamp information is configured for the terminal by the first CN element, when the terminal registers with the network. Or, the third configuration function for calculating security stamp information is configured in the SIM of the terminal.

When implemented, the first base station receives the RRC connection request message from the terminal. The RRC connection request message carries second UE ID information of the terminal. If the first base station decides to reject access of the terminal, the first base station addresses the first CN element based on the second UE ID information of the terminal and sends the third message to the first CN element. The third message carries first indication information and the second UE ID information of the terminal, such that the first calculation parameter and the first security stamp information is conveyed to the first base station by the first CN element through the fourth message.

Based on the above procedure, after receiving the RRC reject message, the terminal verifies validity of the first base station. If validity verification of the first base station is successful, the terminal accepts the RRC reject message and configuration information contained in the RRC reject message. The configuration information contained in the RRC reject message includes duration information of a wait timer. On the other hand, if validity verification of the first base station fails, the terminal reselects a cell and initiate an RRC connection resume procedure again.

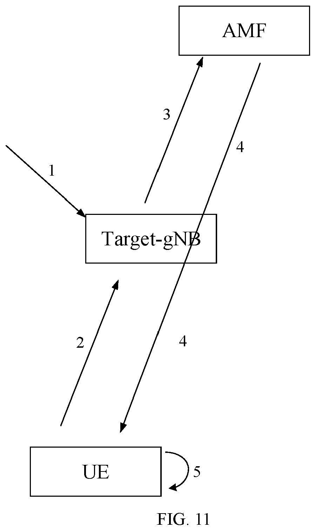

The situation where the first security stamp information carried in the RRC reject message is generated by the first base station will be described below with reference to FIG. 11, in which the Target-gNB is the first base station and AMF is the first CN network.
1. Before handling the RRC reject message at the network side, OAM configures for all base stations a function for generating a security stamp. The prototype of the function can be function(S-TMSI, Counter), input parameters are however not limited to these parameters.
2. UE sends an RRC connection request message to the network side, and the message carries information such as UE ID S-TMSI.
3. The Target-gNB decides to reject the UE, and/or sets a longer duration for a wait timer. The Target-gNB addresses the target AMF according to the S-TMSI. The Target-gNB sends a message to AMF to indicate that the Target-gNB decides to reject the connection request of the UE. AMF configures Counter.
4. The Target-gNB calculates a security stamp according to a function pre-configured for calculating the security stamp and Counter from AMF, and carries the security stamp in the RRC reject message to be conveyed to the UE. The RRC reject message carries information such as the security stamp, counter, waittimer and the like.
5. After receiving the RRC reject message, the UE calculates a new security stamp according to the COUNTER information and a function pre-configured for calculating the security stamp, then the UE compares the new security stamp with the security stamp configured at the network side to determine whether the Target-gNB is a false base station. If the Target-gNB is not a false base station, the UE accepts the RRC reject message and all configuration information (such as waittimer) carried therein. Otherwise, the UE ignores the RRC reject message and considers that the current serving cell is in a barred state, and the UE will reselect a cell and try to initiate RRC connection recovery again.

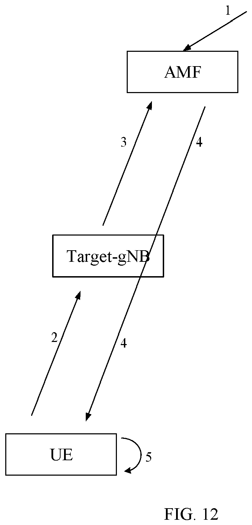

The situation where the first security stamp information carried in the RRC reject message is generated by the first CN element will be described below with reference to FIG. 12, in which the Target-gNB is the first base station and AMF is the first CN network.
1. Before handling the RRC reject message, the network side acquires pre-configuration information for generating security stamp information in the following three manners.
   Option 1: OAM configures a function for generating a security stamp for all base stations, the prototype of the function can be function (Counter, S-TMSI). However, input parameters are not limited to these parameters. UE acquires the function information through pre-configuration in the USIM card.
   Option 2: AMF generates the security stamp, for example, AMF generates shortMAC-I based on a security key and an algorithm for a non-access stratum (NAS) layer, the shortMAC-I will be configured in the RRC reject message for network validity verification by the terminal. Inputs for the network side to generate shortMAC-I include but not limited to: cell ID information of the Anchor-gNB and cell ID information of the target base station, UE ID information, and other constant information such as BEARER, COUNT, and DIRECTION. The value of the constant information can be set to 0 or 2. The security key and algorithm can be the key and algorithm used at the Anchor-gNB.
   Option 3: AMF configures function information for calculating a security stamp and save the function information as UE context, when the UE registers with the network.
2. The UE sends the RRC connection request message to the network side, and the RRC connection request message carries information such as UE ID S-TMSI.
3. The Target-gNB decides to reject the UE, and/or sets a longer duration for a wait timer. The Target-gNB addresses the target AMF according to S-TMSI, and sends a message to AMF. The message indicates that the Target-gNB decides to reject the UE. AMF calculates the security stamp and configures the security stamp and Counter for the Target-gNB.
4. The Target-gNB carried the security stamp and Counter received from AMF in the RRC reject message to be sent to the UE. The RRC reject message carries the security stamp, counter, waittimer, and the like.
5. After receiving the RRC reject message, the UE calculates a new security stamp according to the COUNTER information and a function pre-configured for calculating the security stamp, then the UE compares the new security stamp with the security stamp configured at the network side to determine whether the Target-gNB is a false base station. If the Target-gNB is not a false base station, the UE accepts the RRC reject message and all configuration information (such as waittimer) carried therein. Otherwise, the UE ignores the RRC reject message and considers that the current serving cell is in a barred state, and the UE will reselect a cell and try to initiate RRC connection recovery again.

In the schemes illustrated in FIG. 10 to FIG. 12, Counter can be reset to 0 every time the S-TMSI or the NAS key of the UE is security updated.

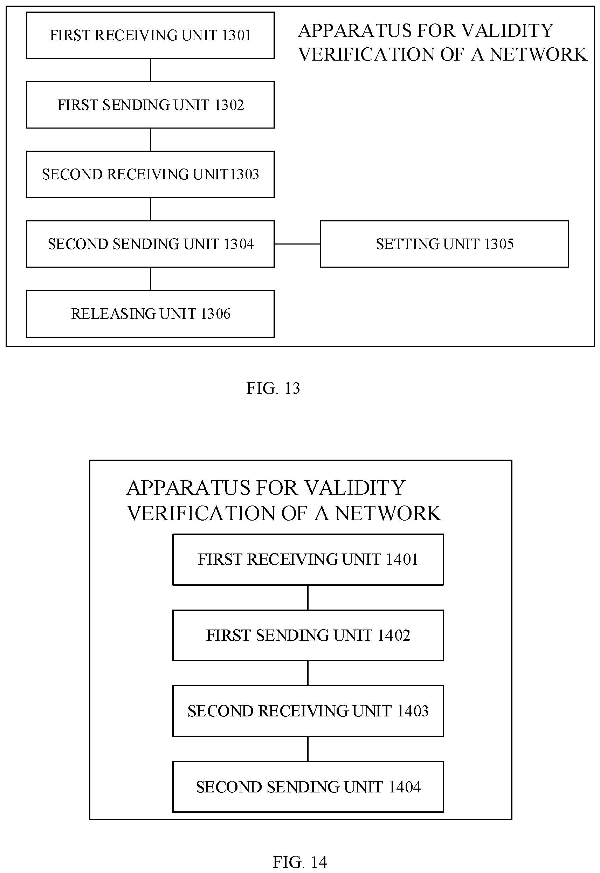

FIG. 13 is a first schematic structural diagram of an apparatus for validity verification of a network according to embodiments. As illustrated in FIG. 13, the apparatus includes a first receiving unit 1301, a first sending unit 1302, a second receiving unit 1303, and a second sending unit 1304.

The first receiving unit 1301 is configured to receive an RRC resume request message from a terminal. The first sending unit 1302 is configured to send a first message to a second base station when a first base station decides to reject access of the terminal. The first message carries first indication information, and the first indication information is for indicating to the second base station that the first base station decides to reject access of the terminal and requests to activate UE security.

The second receiving unit 1303 is configured to receive a second message from the second base station. The second sending unit 1304 is configured to send an RRC reject message to the terminal based on the second message. The RRC reject message is integrity protected.

In embodiments of the invention, integrity protection of the RRC reject message is realized by the first base station.

The second receiving unit 1303 is configured to receive the second message from the second base station. The second message carries security information, and the security information includes a first key and a first security algorithm.

The second sending unit 1304 is configured to send the RRC reject message to the terminal through a first SRB, when the first base station supports the first security algorithm, and the RRC reject message is integrity protected. Or, the second sending unit 1304 is configured to send the RRC reject message to the terminal through a second SRB, when the first base station does not support the first security algorithm, and the RRC reject message is not integrity protected.

In some embodiments, the apparatus further includes a setting unit 1305. The setting unit 1304 is configured to set first duration information of a wait timer, when the first base station supports the first security algorithm, and the first duration information is conveyed to the terminal through the RRC reject message. The setting unit 1304 is configured to set second duration information of the wait timer, when the first base station does not support the first security algorithm; the second duration information is conveyed to the terminal through the RRC reject message, and the second duration information is less than or equal to a first duration threshold.

In some embodiments, the first key in the security information is one of: a key used at the second base station, or a key generated based on cell ID information of the first base station. The first security algorithm in the security information is: an integrity protection algorithm and an encryption algorithm used at the second base station.

In some embodiments, the first receiving unit 1301 is configured to receive the RRC resume request message from the terminal. The RRC resume request message carries first UE ID information of the terminal and MAC-I information for validity verification of the terminal.

In some embodiments, the first sending unit 1302 is configured to address the second base station based on the first UE ID information of the terminal and send the first message to the second base station, when the first base station decides to reject access of the terminal. The first message carries the first indication information, the first UE ID information of the terminal, and the MAC-I information. The MAC-I information is for validity verification of the terminal by the second base station, and the security information is sent to the first base station by the second base station when validity verification of the terminal is successful.

In some embodiments, the first message further carries cell ID information of the first base station. The cell ID information of the first base station includes at least one of: CGI, PCI, frequency information, or AFRCN.

In some embodiments, second indication information is sent to the first base station from the second base station when validity verification of the terminal based on the MAC-I information by the second base station fails. The second indication information is for indicating to the first base station that validity verification of the terminal fails.

In some embodiments, the apparatus further includes a releasing unit 1306. The releasing unit 1306 is configured to release UE related information of the terminal. The UE related information of the terminal includes UE related information from the terminal and UE related information from the second base station.

In some unclaimed examples, integrity protection of the RRC reject message is realized by the second base station.

The second receiving unit 1303 is configured to receive the second message from the second base station. The second message includes TB data blocks. The TB data blocks are generated by the second base station by: activating AS security of the terminal and constructing the RRC reject message, and the RRC reject message is integrity protected.

The second sending unit 1304 is configured to convey the TB data blocks to the terminal through the RRC reject message and indicates to the terminal that the TB data blocks are generated by the second base station.

In some embodiments, the first receiving unit 1301 is configured to receive the RRC resume request message from the terminal. The RRC resume request message carries first UE ID information of the terminal and MAC-I information for validity verification of the terminal.

In some embodiments, the first sending unit 1302 is configured to address the second base station based on the first UE ID information of the terminal and send the first message to the second base station, when the first base station decides to reject access of the terminal. The first message carries the first indication information, duration information of a wait timer, the first UE ID information of the terminal, and the MAC-I information. The MAC-I information is for validity verification of the terminal by the second base station, and the TB data blocks are generated by the second base station when validity verification of the terminal is successful.

In some embodiments, the first message further carries cell ID information of the first base station. The cell ID information of the first base station includes at least one of: CGI, PCI, frequency information, or AFRCN.

In some embodiments, second indication information is sent to the first base station by the second base station when validity verification of the terminal based on the MAC-I information by the second base station fails. The second indication information is for indicating to the first base station that validity verification of the terminal fails.

In some embodiment, the terminal is configured to verify validity of the first base station after receiving the RRC reject message, and accept the RRC reject message and configuration information contained in the RRC reject message when validity verification of the first base station is successful, or reselect a cell and initiate an RRC connection resume procedure when validity verification of the first base station fails. The configuration information contained in the RRC reject message includes duration information of a wait timer.

It should be understood by those skilled in the art that functions of each unit in the apparatus for validity verification of a network illustrated in FIG. 13 can be comprehended with reference to the relevant description of the method for validity verification of a network as described above. The functions of each unit in the apparatus for validity verification of a network illustrated in FIG. 13 can be realized by programs running on the processor or through a specific logic circuit.

FIG. 14 is a second schematic structural diagram of an apparatus for validity verification of a network that does not form part of the claimed invention. As illustrated in FIG. 14, the apparatus includes a first receiving unit 1401, a first sending unit 1402, a second receiving unit 1403, and a second sending unit 1404.

The first receiving unit 1401 is configured to receive an RRC resume request message from a terminal. The first sending unit 1402 configured to send a first message to a second base station when a first base station decides to reject access of the terminal. The first message carries first indication information for indicating to the second base station that the first base station decides to reject access of the terminal. The second receiving unit 1403 is configured to receive a second message from the second base station. The second sending unit 1404 is configured to send an RRC reject message to the terminal based on the second message. The RRC reject message carries first security stamp information, and the first security stamp information is for validity verification of the first base station by the terminal.

In some embodiments, the first security stamp information is generated by the second base station.

In some embodiment, the first security stamp information is generated by the second base station based on a first calculation parameter and a second configuration function. Or, the first security stamp information is generated by the second base station based on at least one of cell ID information of the first base station, cell ID information of the second base station, UE ID information of the terminal, or constant information.

The second receiving unit 1403 is configured to receive the second message from the second base station, and the second message carries the first security stamp information and the first calculation parameter.

The second sending unit 1404 is configured to send the RRC reject message to the terminal, and the RRC reject message carries the first security stamp information and the first calculation parameter. Second security stamp information is generated by the terminal based on the first calculation parameter and a second configuration function, and the second security stamp information is compared with the first security stamp information by the terminal for validity verification of the first base station.

In some embodiments, the second configuration function for the second base station is configured as follows. The second configuration function for calculating security stamp information is configured for at least one base station by OAM, where the at least one base station includes the second base station.

In some embodiments, the second configuration function for the terminal is configured as follows. The second configuration function for calculating security stamp information is configured for the terminal by the second base station, when the second base station releases the terminal to an inactive state. Or, the second configuration function for calculating security stamp information is configured in a SIM of the terminal.

In some embodiments, the first receiving unit 1401 is configured to receive the RRC resume request message from the terminal. The RRC resume request message carries first UE ID information of the terminal and MAC-I information for validity verification of the terminal.

In some embodiments, the first sending unit 1402 is configured to address the second base station based on the first UE ID information of the terminal and send the first message to the second base station, when the first base station decides to reject access of the terminal. The first message carries the first indication information, the first UE ID information of the terminal, and the MAC-I information. The MAC-I information is for validity verification of the terminal by the second base station, and first security stamp information is generated and sent to the first base station by the second base station when validity verification of the terminal is successful.

In some embodiments, the first message further carries cell ID information of the first base station. The cell ID information of the first base station includes at least one of: CGI, PCI, frequency information, or AFRCN.

In some embodiments, second indication information is sent to the first base station from the second base station when validity verification of the terminal based on the MAC-I information by the second base station fails. The second indication information is for indicating to the first base station that validity verification of the terminal fails.

In some embodiments, the first security stamp information is generated by the first base station.

The second receiving unit 1403 is configured to receive the second message from the second base station. The second message carries security information.

The second sending unit 1404 is configured to generate first security stamp information based on the security information and send the RRC reject message to the terminal. The RRC reject message carries the first security stamp information and a first calculation parameter. Second security stamp information is generated by the terminal based on the first calculation parameter and a second configuration function, and the second security stamp information is compared with the first security stamp information by the terminal for validity verification of the first base station.

In some embodiments, the security information includes the first calculation parameter. Accordingly, the first security stamp information is generated by the first base station based on the first calculation parameter and the second configuration function.

Alternatively, the security information includes a security key and a security algorithm. Accordingly, the first security stamp information is generated by the first base station by using the security key and the security algorithm and based on at least one of cell ID information of the first base station, cell ID information of the second base station, UE ID information of the terminal, or constant information.

Alternatively, the security information includes a first calculation parameter, a security key, and a security algorithm. Accordingly, the first security stamp information is generated by the first base station by using the security key and the security algorithm and based on the first calculation parameter and the second configuration function.

In some embodiments, the second configuration function for the first base station is configured as follows: The second configuration function for calculating security stamp information is configured for at least one base station by OAM, and the at least one base station includes the first base station. Or, the second configuration function is configured by the second base station.

In some embodiments, the second configuration function for the terminal is configured as follows. The second configuration function for calculating security stamp information is configured for the terminal by the second base station, when the second base station releases the terminal to an inactive state. OR, the second configuration function for calculating security stamp information is configured in a SIM of the terminal.

In some embodiments, the first receiving unit 1401 is configured to receive the RRC resume request message from the terminal. The RRC resume request message carries first UE ID information of the terminal and MAC-I information for validity verification of the terminal.

In some embodiments, the first sending unit 1402 is configured to address the second base station based on the first UE ID information of the terminal and send the first message to the second base station, when the first base station decides to reject access of the terminal. The first message carries the first indication information, the first UE ID information of the terminal, and the MAC-I information. The MAC-I information is for validity verification of the terminal by the second base station. At least one of the security information and cell ID information of the second base station is sent to the first base station by the second base station when validity verification of the terminal is successful.

In some embodiments, the first message further carries cell ID information of the first base station. The cell ID information of the first base station includes at least one of: CGI, PCI, frequency information, or AFRCN.

In some embodiments, second indication information is sent to the first base station by the second base station when validity verification of the terminal based on the MAC-I information by the second base station fails. The second indication information is for indicating to the first base station that validity verification of the terminal fails.

In some embodiments, the terminal is configured to verify validity of the first base station after receiving the RRC reject message, and accept the RRC reject message and configuration information contained in the RRC reject message when validity verification of the first base station is successful, or reselect a cell and initiate an RRC connection resume procedure when validity verification of the first base station fails. The configuration information contained in the RRC reject message includes duration information of a wait timer.

It should be understood by those skilled in the art that functions of each unit in the apparatus for validity verification of a network illustrated in FIG. 14 can be comprehended with reference to the relevant description of the method for validity verification of a network as described above. The functions of each unit in the apparatus for validity verification of a network illustrated in FIG. 14 can be realized by programs running on the processor or through a specific logic circuit.

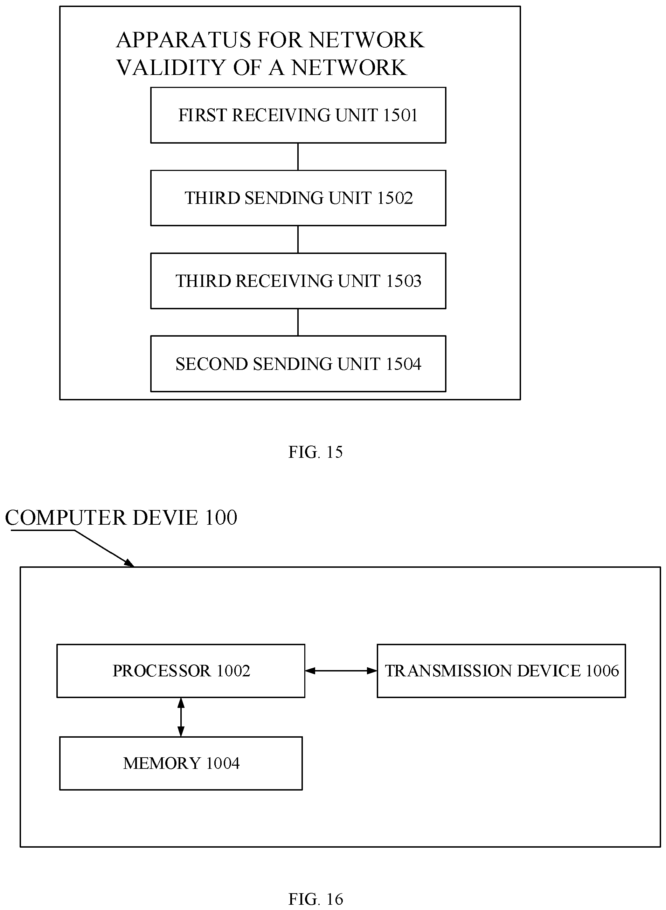

FIG. 15 is a second schematic structural diagram of an apparatus for validity verification of a network that does not form part of the claimed invention. As illustrated in FIG. 15, the apparatus includes a first receiving unit 1501, a third sending unit 1502, a third receiving unit 1503, and a second sending unit 1504.

The first receiving unit 1501 is configured to receive an RRC connection request message from a terminal. The third sending unit 1502 is configured to send a third message to a first core network (CN) element. The third message is for indicating to the first CN element that the first base station decides to reject access of the terminal. The third receiving unit 1503 is configured to receive a fourth message from the first CN element. The second sending unit 1504 is configured to send an RRC reject message to the terminal based on the fourth message. The RRC reject message carries first security stamp information, and the first security stamp information is for validity verification of the first base station by the terminal.

In some embodiments, the first security stamp information is generated by the first base station.

The third receiving unit 1503 is configured to receive the fourth message from the first CN element. The fourth message carries a first calculation parameter.

The second sending unit 1504 is configured to generate the first security stamp information based on the first calculation parameter and a third configuration function, and send the RRC reject message to the terminal. The RRC reject message carries the first security stamp information and the first calculation parameter. Second security stamp information is generated by the terminal based on the first calculation parameter and the third configuration function, and the second security stamp information is compared with the first security stamp information for validity verification of the first base station.

In some embodiments, the third configuration function for the first base station is configured as follows. The third configuration function for calculating security stamp information is configured for at least one base station by OAM, and the at least one base station includes the first base station.

In some embodiments, the third configuration function for the terminal is configured as follows. The third configuration function for calculating security stamp information is configured in a SIM of the terminal.

In some embodiments, the first receiving unit 1501 is configured to receive the RRC connection request message from the terminal. The RRC connection request message carries second UE ID information of the terminal.

In some embodiments, the third sending unit 1502 is configured to address the first CN element based on the second UE ID information of the terminal and send the third message to the first CN element, when the first base station decides to reject access of the terminal. The third message carries first indication information and the second UE ID information of the terminal, such that the first calculation parameter is conveyed to the first base station by the first CN element through the fourth message.

In some embodiments, the first security stamp information is generated by the first CN element.

In some embodiments, the first security stamp information is generated by the first CN element based on the first calculation parameter and the third configuration function, or the first security stamp information is generated by the first CN element based on at least one of cell ID information of the first base station, cell ID information of the second base station, UE ID information of the terminal, or constant information.

The third receiving 1503 is configured to receive the fourth message from the first CN element, and the fourth message carries first security stamp information and a first calculation parameter.

The second sending unit 1504 is configured to send the RRC reject message to the terminal, and the RRC reject message carries the first security stamp information and the first calculation parameter. Second security stamp information is generated by the terminal based on the first calculation parameter and a third configuration function, and the second security stamp information is compared with the first security stamp information by the terminal for validity verification of the first base station.

In some embodiments, the third configuration function for the first CN element is configured as follows. The third configuration function for calculating security stamp information is configured for at least one CN element by OAM, and the at least one CN element includes the first CN element.

In some embodiments, the third configuration function for the terminal is configured as follows. The third configuration function for calculating security stamp information is configured for the terminal by the first CN element, when the terminal registers with the network. Or, the third configuration function for calculating security stamp information is configured in a SIM of the terminal.

In some embodiments, the first receiving unit 1501 is configured to receive the RRC connection request message from the terminal. The RRC connection request message carries second UE ID information of the terminal.

In some embodiments, the third sending unit 1502 is configured to address the first CN element based on the second UE ID information of the terminal and send the third message to the first CN element, when the first base station decides to reject access of the terminal. The third message carries first indication information and the second UE ID information of the terminal, such that the first security stamp information and the first calculation parameter are conveyed to the first base station by the first CN element through the fourth message.

In some embodiments, the terminal is configured to verify validity of the first base station after receiving the RRC reject message, and accept the RRC reject message and configuration information contained in the RRC reject message when validity verification of the first base station is successful, or reselect a cell and initiate an RRC connection resume procedure when validity verification of the first base station fail. The configuration information contained in the RRC reject message includes duration information of a wait timer.

It should be understood by those skilled in the art that functions of each unit in the apparatus for validity verification of a network illustrated in FIG. 15 can be comprehended with reference to the relevant description of the method for validity verification of a network as described above. The functions of each unit in the apparatus for validity verification of a network illustrated in FIG. 15 can be realized by programs running on the processor or through a specific logic circuit.

If the apparatus for validity verification of a network is implemented in the form of a software function module and sold or used as an independent product, it may also be stored in a computer-readable storage medium. Based on this understanding, technical solutions of the embodiments of the present disclosure that are essentially or contribute to the prior art can be embodied in the form of software products. The computer software product is stored in a storage medium and includes several instructions, which can cause a computer device (which may be a personal computer, a server, or a network device) to execute all or part of the methods described in the embodiments of the present disclosure. The foregoing storage medium includes: a U disk, a mobile hard disk, a read-only memory (ROM), a magnetic disk, or CD, and other media that can store program codes. In this way, the embodiments are not limited to any specific combination of hardware and software.

Correspondingly, embodiments further provide a computer storage medium in which computer-executable instructions are stored. When the computer-executable instructions are executed by a processor, the foregoing method for validity verification of a network can be implemented.

FIG. 16 is a schematic structural diagram of a computer device according to embodiments. As illustrated in FIG. 16, the computer device 100 may include one or more (only one is illustrated in the figure) processor 1002 (the processor 1002 may include but is not limited to a micro controller unit (MCU) or a programmable logic device such as field programmable gate array (FPGA), a memory 1004 for storing data, and a transmission device 1006 for a communication function. Those of ordinary skill in the art can understand that the structure illustrated in FIG. 16 is only for illustration, and it does not limit the structure of the electronic device. For example, the computer device 100 may include more or fewer components than those illustrated in FIG. 16, or have a different configuration from that illustrated in FIG. 16.

The memory 1004 may be used to store software programs and modules of application software, such as program instructions / modules corresponding to the methods in the embodiments of the present disclosure. By running the software programs and modules stored in the memory 1004, the processor 1002 executes various functional applications as well as data processing, that is, implement the method described above. The memory 1004 may include a high-speed random access memory, and may further include a non-volatile memory, such as one or more magnetic storage devices, a flash memory, or other non-volatile solid-state memory. In some examples, the memory 1004 may further include memory remotely set with respect to the processor 1002, and these remote memories may be connected to the computer device 100 through a network. Examples of the above network include, but are not limited to, the Internet, an intranet, a local area network, a mobile communication network, and combinations thereof.

The transmission device 1006 is used for receiving or transmitting data via a network. A specific example of the network described above may include a wireless network provided by a communication provider of the computer device 100. In one example, the transmission device 1006 includes a network adapter (NIC, Network Interface Controller), which can be connected to other network devices through a base station so as to communicate with the Internet. In one example, the transmission device 1006 may be a radio frequency (RF) module, which is used to communicate with the Internet in a wireless manner.

The technical solutions described in the embodiments can be arbitrarily combined without conflict.

In the embodiments provided herein, it should be understood that the disclosed method and smart device may be implemented in other ways. The device embodiments described above are only schematic. For example, the division of the units is only a logical function division. In actual implementation, there may be another division manner, such as multiple units or components may be combined, or can be integrated into another system, or some features can be omitted or not implemented. In addition, the displayed or discussed components are coupled, or directly coupled, or communicated with each other through some interfaces. The indirect coupling or communications of the device or unit may be electrical, mechanical, or in other forms.

The units described above as separate components may or may not be physically separated, and the components displayed as units may or may not be physical units, which may be located in one place or distributed across multiple network units. Some or all of the units may be selected according to actual needs to achieve the objective of the solution of the embodiments.

In addition, each functional unit in each embodiment may be integrated into a second processing unit, or each unit may be separately used as a unit, or two or more units may be integrated into a unit. The above integrated unit may be implemented in the form of hardware, or in the form of hardware and software functional units.

The above are only specific implementations of this application, the scope of protection of this application is not limited thereto. Any person skilled in the art can easily think of changes or replacements within the technical scope disclosed in this application, which should be covered by the protection scope of this application.

## Claims

1. A method for validity verification of a network, comprising:
receiving (401), at a first base station, a radio resource control (RRC) resume request message from a terminal;
sending (402), at the first base station, a first message to a second base station when the first base station decides to reject access of the terminal, wherein the first message carries first indication information, and the first indication information is for indicating to the second base station that the first base station decides to reject access of the terminal and requests to activate UE security; and
receiving (403), at the first base station, a second message from the second base station, wherein the second message carries security information, and the security information comprises a first key and a first security algorithm; and
sending, at the first base station, the RRC reject message to the terminal through a first signaling radio bearer (SRB), when the first base station supports the first security algorithm, wherein the RRC reject message is integrity protected by the first base station.

2. The method of claim 1, further comprising:
sending, at the first base station, the RRC reject message to the terminal through a second SRB, when the first base station does not support the first security algorithm, wherein the RRC reject message is not integrity protected.

3. The method of claim 2, further comprising:
setting, at the first base station, first duration information of a wait timer, when the first base station supports the first security algorithm, wherein the first duration information is conveyed to the terminal through the RRC reject message; or
setting, at the first base station, second duration information of the wait timer, when the first base station does not support the first security algorithm, wherein the second duration information is conveyed to the terminal through the RRC reject message, and the second duration information is less than or equal to a first duration threshold.

4. The method of claim 2 or 3, wherein
the first key in the security information is one of: a key used at the second base station, or a key generated based on cell identity (ID) information of the first base station; and
the first security algorithm in the security information is: an integrity protection algorithm and an encryption algorithm used at the second base station.

5. The method of any of claims 2 to 4, wherein receiving, at the first base station, the RRC resume request message from the terminal comprises:
receiving, at the first base station, the RRC resume request message from the terminal, wherein the RRC resume request message carries a first UE ID of the terminal and MAC-I information for validity verification of the terminal.

6. The method of claim 5, wherein sending, at the first base station, the first message to the second base station when the first base station decides to reject access of the terminal comprises:
addressing, at the first base station, the second base station based on the first UE ID of the terminal and sending, at the first base station, the first message to the second base station, when the first base station decides to reject access of the terminal; wherein the first message carries the first indication information, the first UE ID of the terminal, and the MAC-I information.

7. The method of claim 6, wherein the first message further carries cell ID information of the first base station, and the cell ID information of the first base station comprises at least one of: cell global identifier (CGI), physical cell identifier (PCI), frequency information, or absolute radio frequency channel number (AFRCN).

8. The method of claim 6 or 7, wherein second indication information is sent to the first base station by the second base station when validity verification of the terminal based on the MAC-I information fails, wherein the second indication information is for indicating to the first base station that validity verification of the terminal fails.

9. The method of any of claims 2 to 8, further comprising:
releasing, at the first base station, UE related information of the terminal after sending the RRC reject message, wherein the UE related information of the terminal comprises UE related information from the terminal and UE related information from the second base station.

10. An apparatus for validity verification of a network, comprising:
at least one processor (1002);
a transceiver (1006); and
a memory (1004) storing instructions which, when executed by the at least one processor (1002), cause the transceiver (1006) to carry out the steps of the method of any of claims 1 to 9.

## Patentansprüche

1. Verfahren zur Gültigkeitsverifizierung eines Netzwerks, das Folgendes umfasst:
Empfangen (401) einer Funkressourcensteuerungs(RRC)-Wiederaufnahmeanforderungsnachricht an einer ersten Basisstation von einem Endgerät;
Senden (402) einer ersten Nachricht an der ersten Basisstation an eine zweite Basisstation, wenn die erste Basisstation entscheidet, den Zugriff auf das Endgerät zurückzuweisen, wobei die erste Nachricht erste Anzeigeinformationen enthält und die ersten Anzeigeinformationen dem Anzeigen, dass die erste Basisstation entscheidet, den Zugriff auf das Endgerät zurückzuweisen, und anfordert, eine UE-Sicherheit zu aktivieren, dienen; und
Empfangen (403) einer zweiten Nachricht an der ersten Basisstation von der zweiten Basisstation, wobei die zweite Nachricht Sicherheitsinformationen enthält und die Sicherheitsinformationen einen ersten Schlüssel und einen ersten Sicherheitsalgorithmus umfassen; und
Senden der RRC-Zurückweisungsnachricht an der ersten Basisstation über einen ersten Signalisierungsfunkträger (SRB) an das Endgerät, wenn die erste Basisstation den ersten Sicherheitsalgorithmus unterstützt, wobei die RRC-Zurückweisungsnachricht durch die erste Basisstation integritätsgeschützt wird.

2. Verfahren nach Anspruch 1, das ferner Folgendes umfasst:
Senden der RRC-Zurückweisungsnachricht an der ersten Basisstation über einen zweiten SRB an das Endgerät, wenn die erste Basisstation den ersten Sicherheitsalgorithmus nicht unterstützt, wobei die RRC-Zurückweisungsnachricht nicht integritätsgeschützt wird.

3. Verfahren nach Anspruch 2, das ferner Folgendes umfasst:
Einstellen von ersten Dauerinformationen eines Wartetimers an der ersten Basisstation, wenn die erste Basisstation den ersten Sicherheitsalgorithmus unterstützt, wobei die ersten Dauerinformationen über die RRC-Zurückweisungsnachricht zum Endgerät übermittelt werden; oder
Einstellen von zweiten Dauerinformationen des Wartetimers an der ersten Basisstation, wenn die erste Basisstation den ersten Sicherheitsalgorithmus nicht unterstützt, wobei die zweiten Dauerinformationen über die RRC-Zurückweisungsnachricht zum Endgerät übermittelt werden und die zweiten Dauerinformationen kleiner als oder gleich einem ersten Dauerschwellwert sind.

4. Verfahren nach Anspruch 2 oder 3, wobei
der erste Schlüssel in den Sicherheitsinformationen eines von Folgendem ist: ein Schlüssel, der an der zweiten Basisstation verwendet wird, oder ein Schlüssel, der auf Basis von Zellidentitäts(ID)-Informationen an der ersten Basisstation erzeugt wird; und
der erste Sicherheitsalgorithmus in den Sicherheitsinformationen Folgendes ist: ein Integritätsschutzalgorithmus und ein Verschlüsselungsalgorithmus, die an der zweiten Basisstation verwendet werden.

5. Verfahren nach einem der Ansprüche 2 bis 4, wobei das Empfangen der RRC-Wiederaufnahmeanforderungsnachricht an der ersten Basisstation vom Endgerät Folgendes umfasst:
Empfangen der RRC-Wiederaufnahmeanforderungsnachricht an der ersten Basisstation vom Endgerät, wobei die RRC-Wiederaufnahmeanforderungsnachricht eine erste UE-ID des Endgeräts und MAC-I-Informationen für eine Gültigkeitsverifizierung des Endgeräts enthält.

6. Verfahren nach Anspruch 5, wobei das Senden der ersten Nachricht an der ersten Basisstation an die zweite Basisstation, wenn die erste Basisstation entscheidet, den Zugriff auf das Endgerät zurückzuweisen, Folgendes umfasst:
Adressieren der zweiten Basisstation an der ersten Basisstation auf Basis der ersten UE-ID des Endgeräts und Senden der ersten Nachricht an der ersten Basisstation an die zweite Basisstation, wenn die erste Basisstation entscheidet, den Zugriff auf das Endgerät zurückzuweisen; wobei die erste Nachricht die ersten Anzeigeinformationen, die erste UE-ID des Endgeräts und die MAC-I-Informationen enthält.

7. Verfahren nach Anspruch 6, wobei die erste Nachricht ferner Zell-ID-Informationen der ersten Basisstation enthält und die Zell-ID-Informationen der ersten Basisstation mindestens eines von einer globalen Zellkennung (CGI), einer physischen Zellkennung (PCI), Frequenzinformationen oder eine absolute Funkfrequenzkanalnummer (AFRCN) umfassen.

8. Verfahren nach Anspruch 6 oder 7, wobei die zweiten Anzeigeinformationen von der zweiten Basisstation an die erste Basisstation gesendet werden, wenn eine Gültigkeitsverifizierung des Endgeräts auf Basis der MAC-I-Informationen fehlschlägt, wobei die zweiten Anzeigeinformationen dem Anzeigen, dass die Gültigkeitsverifizierung des Endgeräts fehlschlägt, für die erste Basisstation dient.

9. Verfahren nach einem der Ansprüche 2 bis 8, das ferner Folgendes umfasst:
Freigeben von UE-bezogenen Informationen des Endgeräts an der ersten Basisstation nach Senden der RRC-Zurückweisungsnachricht, wobei die UE-bezogenen Informationen des Endgeräts UE-bezogene Informationen vom Endgerät und UE-bezogene Informationen von der zweiten Basisstation umfassen.

10. Vorrichtung zur Gültigkeitsverifizierung eines Netzwerks, das Folgendes umfasst:
mindestens einen Prozessor (1002);
einen Sendeempfänger (1006) und
einen Speicher (1004), auf dem Anweisungen gespeichert sind, die, wenn sie von dem mindestens einen Prozessor (1002) ausgeführt werden, den Sendeempfänger (1006) veranlassen, die Schritte des Verfahrens nach einem der Ansprüche 1 bis 9 umzusetzen.

## Revendications

1. Procédé de vérification de validité d'un réseau, comprenant :
la réception (401), au niveau d'une première station de base, d'un message de demande de reprise de contrôle de ressource radio (RRC) depuis un terminal ;
l'envoi (402), au niveau de la première station de base, d'un premier message à une seconde station de base lorsque la première station de base décide de rejeter l'accès au terminal, dans lequel le premier message transporte des premières informations d'indication, et les premières informations d'indication servent à indiquer à la seconde station de base que la première station de base décide de rejeter l'accès au terminal et demande d'activer la sécurité d'UE ; et
la réception (403), au niveau de la première station de base, d'un second message depuis la seconde station de base, dans lequel le second message transporte des informations de sécurité, et les informations de sécurité comprennent une première clé et un premier algorithme de sécurité ; et
l'envoi, au niveau de la première station de base, du message de rejet de RRC au terminal par l'intermédiaire d'une première porteuse radio de signalisation (SRB), lorsque la première station de base prend en charge le premier algorithme de sécurité, dans lequel le message de rejet de RRC est protégé en intégrité par la première station de base.

2. Procédé selon la revendication 1, comprenant en outre :
l'envoi, au niveau de la première station de base, du message de rejet de RRC au terminal par l'intermédiaire d'une seconde SRB, lorsque la première station de base ne prend pas en charge le premier algorithme de sécurité, dans lequel le message de rejet de RRC n'est pas protégé en intégrité.

3. Procédé selon la revendication 2, comprenant en outre :
la définition, au niveau de la première station de base, de premières informations de durée d'un minuteur d'attente, lorsque la première station de base prend en charge le premier algorithme de sécurité, dans lequel les premières informations de durée sont transportées vers le terminal par l'intermédiaire du message de rejet de RRC ; ou
la définition, au niveau de la première station de base, de secondes informations de durée du minuteur d'attente, lorsque la première station de base ne prend pas en charge le premier algorithme de sécurité, dans lequel les secondes informations de durée sont transportées vers le terminal par l'intermédiaire du message de rejet de RRC, et les secondes informations de durée sont inférieures ou égales à un premier seuil de durée.

4. Procédé selon la revendication 2 ou 3, dans lequel
la première clé dans les informations de sécurité est l'une des clés suivantes : une clé utilisée au niveau de la seconde station de base, ou une clé générée sur la base d'informations d'identité de cellule (ID) de la première station de base ; et
le premier algorithme de sécurité dans les informations de sécurité est l'un des algorithmes suivants : un algorithme de protection d'intégrité et un algorithme de chiffrement utilisé au niveau de la seconde station de base.

5. Procédé selon l'une quelconque des revendications 2 à 4, dans lequel la réception, au niveau de la première station de base, du message de demande de reprise de RRC depuis le terminal comprend :
la réception, au niveau de la première station de base, du message de demande de reprise de RRC depuis le terminal, dans lequel le message de demande de reprise de RRC transporte un premier ID d'UE du terminal et des informations MAC-I pour la vérification de validité du terminal.

6. Procédé selon la revendication 5, dans lequel l'envoi, au niveau de la première station de base, du premier message à la seconde station de base lorsque la première station de base décide de rejeter l'accès au terminal comprend :
l'adressage, au niveau de la première station de base, de la seconde station de base sur le premier ID d'UE du terminal et l'envoi, au niveau de la première station de base, du premier message à la seconde station de base, lorsque la première station de base décide de rejeter l'accès au terminal ; dans lequel le premier message transporte les premières informations d'indication, le premier ID d'UE du terminal et les informations MAC-I.

7. Procédé selon la revendication 6, dans lequel le premier message transporte en outre des informations d'ID de cellule de la première station de base, et les informations d'ID de cellule de la première station de base comprennent au moins l'un des identifiants suivants : un identifiant général de cellule (CGI), un identifiant de cellule physique (PCI), des informations de fréquence, ou un nombre absolu de canaux de radiofréquence (AFRCN).

8. Procédé selon les revendications 6 ou 7, dans lequel les secondes informations d'indication sont envoyées à la première station de base par la seconde station de base lorsque la vérification de validité du terminal sur la base des informations MAC-I échoue, dans lequel les secondes informations d'indication servent à indiquer à la première station de base que la vérification de validité du terminal échoue.

9. Procédé selon l'une quelconque des revendications 2 à 8, comprenant en outre :
la libération, au niveau de la première station de base, d'informations relatives à l'UE du terminal après l'envoi du message de rejet de RRC, dans lequel les informations relatives à l'UE du terminal comprennent des informations relatives à l'UE provenant du terminal et des informations relatives à l'UE provenant de la seconde station de base.

10. Appareil de vérification de validité d'un réseau, comprenant :
au moins un processeur (1002) ;
un émetteur-récepteur (1006) ; et
une mémoire (1004) stockant des instructions qui, lorsqu'elles sont exécutées par l'au moins un processeur (1002), amènent l'émetteur-récepteur (1006) à exécuter les étapes du procédé selon l'une quelconque des revendications 1 à 9.
